# EUROPEAN PATENT APPLICATION

(11) **EP 4 125 027 A1**
(43) Date of publication of application: **01.02.2023**
(21) Application number: 22187576.8
(22) Date of filing: 28.07.2022
(51) Int. Cl.: G06Q 30/06, G06Q 10/08, G01G 19/414, G06Q 20/20, G07F 17/40, G07G 1/14

(54) **ORDER MANAGEMENT AND FULFILLMENT SYSTEMS AND METHODS**

(30) Priority: 29.07.2021 US 202163227074 P; 26.07.2022 US 202217873648
(71) Applicant: Illinois Tool Works, Inc., Glenview, Illinois 60025 (US)
(72) Inventor: BUHLER, Cherie, Glenview, 60025 (US); DAVIS, Robert S., Glenview, 60025 (US); CLINTON, Evan, Glenview, 60025 (US); MEYER, James, Glenview, 60025 (US); BLANKLEY, Randy L. Jr., Glenview, 60025 (US); LOPEZ VILLEGAS, Angel, Glenview, 60025 (US)
(74) Representative: HGF

(57) **Abstract**

A scale-based order management and fulfillment system includes a computer system configured as an order manager, the computer system connected for electronic receipt of customer orders from one or more external devices or systems; and a plurality of scales within a store. The computer system is configured to dynamically process customer orders for fulfillment.

## Description

### TECHNICAL FIELD

The present application relates generally to scales used to weigh food products in supermarkets, and more particularly to a system, including one or more scales, that facilitates online type customer ordering and fulfillment operations.

### BACKGROUND

Scales have been used in stores such as supermarkets and groceries to weigh and price food items and to generate a pricing label for such food items. A typical store includes multiple scales located in multiple perishables departments. It is important that weighed items be priced properly and therefore scales are commonly connected into a store network. Various types of scale networks exist.

U.S. Patent No. 8,304,668 discloses and claims an inventive and advantageous scale system for handling electronic product orders. Still, with the rise of electronic ordering for all types of goods, further improvements and enhancements are desirable.

### SUMMARY

In one aspect, a scale-based order management and fulfillment system includes a computer system configured as an order manager, the computer system connected for electronic receipt of customer orders from one or more external devices or systems; a plurality of scales within a store, each scale including: (i) a weighing station for receiving food products to be weighed, the weighing station having an associated mechanism for producing weight indicative signals; (ii) a controller for receiving weight indicative signals from the mechanism, the controller operable to establish a price for a weighed food product based in part upon a weight indicative signal produced for that food product; (iii) a communications interface for receiving customer order information from the computer system; and (iv) an operator interface including an operator display, the controller connected with the operator display for control thereof. The controller is configured to receive the customer order information and display, on the operator display, information enabling the operator to select, view and process orders. The computer system is configured to dynamically process customer orders for fulfillment. To that end, the computer system is configured to operate according to any one of, or any grouping of: (i) track incoming customer orders and limiting customer order completion availability based upon a number of orders permitted during a specified time period, (ii) track incoming customer orders and limit customer order completion availability based upon operating hours of a perishables department of the store, (iii) receive order cancellations and determine acceptance or denial of each order cancellation based upon a time parameter associated with the customer order to which such order cancellation relates, (iv) filter customer orders according to a target completion time associated with each customer order and incorporate, into the customer order information communicated to the scales, prioritization data that causes the scales to display received customer orders in a list format that is sequential based on the target completion times for the customer orders, (v) track completion or non-completion of the customer orders and, upon non-completion of a given customer order according to its associated target completion time, generating an alert message that is electronically communicated to a designated store contact, (vi) for each customer order, track each of (1) time of submission of the customer order to the computer system, (2) time of initial opening of the customer order, by a scale operator, for review and fulfillment and (3) time of completion, by the scale operator, of the customer order, (vii) wherein a first external device or system is comprised by an in-store kiosk and a second external device or system is comprised by an online ordering portal, associate each customer order with the first external device or system or the second external device or system and to incorporate, into the customer order information communicated to the scales, an order source indicator that causes the scales to display received customer orders with a visual indication of whether the customer order is a kiosk-type order or an online-type order, and/or (viii) upon receipt, from a given scale, of an indication that a given customer order has been selected for handling by an operator of the given scale, lock the given customer order from selection by another operator on another scale.

### Computer System/Order Manager

In embodiments, the order manager could exist in the cloud, a virtual machine, or a headquarters dedicated server, or other suitable computer system. If the order manager is running on a store server, that system may be dedicated exclusively to serve the scales within that store. The order manager store server can maintain communication to support the following actions: receive new orders coming from a Customer Online portal, and update the status of the orders in case they have been fulfilled or expired in the store to the centralized order manager. Both order manager interfaces (web page and web service) can support the following services: create a new order, read orders for a given store sorted by pick up time (ascending), read order details for a given order number, update order status - ready/fulfilled, block an order to prevent duplications, release an order only by the same scale operator that created it, cancel a specific order (from a remote online order).

In embodiments, the computer system/order manager provides (serve up) a web interface the operator can reach from the scale to visualize the incoming orders for the current configured store/department and retrieve the online order details.

In embodiments, the computer system/order manager can filter the orders for the day and list them sorted by pickup date/time, the one with the shortest time appears first on the list. In the case of a web interface, the web page supports sorting by different columns: Order number, pick up time, requested time, status, etc.

In embodiments, the computer system/order manager provides the list of orders those orders to fulfill in the next set time period, either as a web page or a web service interface. This setting can be configurable/adjustable, with a minimum permitted time period (e.g., 1 hour) to give operators enough time to prepare the order.

In embodiments, if an order expired and was not fulfilled, optionally the computer system/order manager supports sending an alert via email or SMS to a configured store contact (e.g., both a primary and secondary contact can be supported, such as a store manager, department manager, online order coordinator, etc.).

In embodiments, to enable store/department managers to keep track of scale operator performance and the process in general, the computer system/order manager keeps track of the following events - when the order: (i) was submitted in the system (from a kiosk or an online portal), (ii) was started to fulfill by an operator and (iii) was fulfilled and set ready to pick up.

In embodiments, when receiving an external request to submit an order from a remote system (e.g. Customer Online portal) the computer system/order manager verifies if there are open time slots available for the request. If so, the computer system/order manager responds by providing options of open slots for pick up time. This feature can be used to protect the scale operators by preventing too many orders at the same time and inform the customer of time slot alternatives.

In embodiments, the computer system/order manager is configured to accept a maximum number of orders to be ready to pick up per hour (e.g., a default value can be 10 orders per hour, but the setting may be adjustable). Additionally, the computer system/order manager supports a configuration for business/department hours, which acts as a limit of when the store can have the order ready for pick up. If there is no time slot available, the computer system/order manager rejects the order and/or provides near-future options for pick up.

In embodiments, the computer system/order manager receives order cancellations (from remote online orders) within a configurable time before the pickup time. If the cancellation is not within the configured time before pickup (e.g., at least 1 hour before pickup), the computer system/order manager responds with a denial of cancellation message because it is too close to the pick-up time, and the event is logged.

In embodiments, the computer system/order manager supports a web services (RESTful API) interface which will provide all the functionality that the scales, web interfaces, and external systems need to interact and feed with information in the system.

In embodiments, an external system could be a customer online portal, accessible via a web browser or mobile app, from there the information will be received in the system using the RESTful API.

In embodiments, an in-store kiosk will allow customers to create orders from a predefined selection of items and this kiosk will submit orders to the online order API.

In embodiments, the computer system/order manager provides a web page displaying the current status of the online orders in a simplified way including only the order number.

In embodiments, the computer system/order manager provides a web interface to login and configure the functionality and enable/disable features.

In embodiments, the computer system/order manager enables store personnel to remotely retrieve logged data at the store level and also at the corporate level for all stores, and export and download the data to a CSV or XLSX file from a web page. Corporate level data retrieval can have the functionality to include any or all stores by exposing a web service returning in JSON format.

In embodiments, to facilitate the system, transactions can be categorized as an Order Type (e.g., Now Serving, Kiosk Order or Web Order). Fields reported in the order detail record can include: Store Number, Store Department, Operator ID, Operator Name, Order Type (Now Serving, Kiosk, Web), Order number (or now serving number), Order line number, Time stamp of order (or when now serving number was issued), Time stamp of order retrieval, Time stamp of order cancellation (if applicable), Order Cancellation reason (if applicable), PLU Number, PLU Substitution (if applicable), PLU Description, PLU price, Ordered Weight (N/A for now serving transaction), Actual weight, Order line Price, Time stamp of order line completion, and Time stamp of order completion.

### Scales

In embodiments, the application/online ordering client runs in the scale and is integrated with the scale application to allow an easy interaction and allow to toggle between screens.

In embodiments, the scales display the online orders directly in the new application's window and refresh orders available periodically (configurable). If the online ordering client is not visible in the scale user interface, the customer can opt to use a Flashkey to still receive alerts and notifications of new orders.

In embodiments, the scale online ordering client provides a way to print labels of the items in the order.

In embodiments, the scales interface with the computer system via one of a web page interface or a scale online ordering client application. In the case of a web page interface, the scale uses a loosely coupled option to interact with the order manager via web browser in the scale and receives the orders and includes a visual notification mechanism of when a new order is available. This could be located in one of the following places: the left panel, as a web control in the center panel, as a separate browser called using a "Browse web" flashkey. In the case of a scale online ordering client application, more interaction with the scale UI connects to a web service to retrieve new orders, display detail of the orders, and update the status of the orders fulfilled.

With both interface options, the application can be loosely coupled and there is no need to interact directly with a customer database.

In embodiments, the computer system/order manager is configurable to allow scale operators to block the selected order while fulfilling it to prevent duplication of orders.

### Queuing Manager (Now Serving)

Now-Serving solutions currently offered in perishables departments have previously been controlled in one scale, which is selected as master. Here, queuing manager is integrated into the computer system that includes the order manager.

In embodiments, this feature works in conjunction with the ordering manager or as an individual module. The end-customer chooses to create an order at the kiosk or take a number and wait to be served by a person in the department.

In embodiments, the queueing manager exposes a web interface that will be displayed in the networked scales via a web browser to manage the queue.

In embodiments, the queuing manager provides a web page to be displayed on a screen in the store (e.g., a Now-serving billboard). Displaying the turn to be served, the customers waiting along with the option of a slideshow, and the online order status as an option.

In embodiments, Now Serving is integrated to be able to log PLU, weight, price, transaction times, etc. of the Now serving transaction. These data points are logged as outlined in the previous section(s).

### In-Store Kiosk

In embodiments, an -in-store kiosk integrate two main services: a queueing system and an interface to create orders from a preselected set of products in a supermarket department. The kiosk is configured to interact with the computer system/order manager, using the exposed endpoints described in the coming sections to submit new customer orders.

In embodiments, the kiosk is configured to allow the supermarket to choose the activation of the online order option, the queueing system, or both.

In embodiments, the use case for this feature when both options are on includes the user approaching the kiosk which presents two possible options: Take a number or Create an order. If the customer chooses the Take a number option, (i) the kiosk will print the next number the count to a printer to determine and notify the queueing manager a new customer is waiting, (ii) the queueing manager logs when the turn was taken, (iii) the queuing manager notifies the scales that a new customer is waiting to be served (e.g., the web page displayed on the scale updates the number of customers waiting and visually notifies the operator, (iv) the take a number billboard screen refreshes the number of customers waiting for a turn, (v) the scale operator calls a new customer by touching the Next customer button in the web interface on the scale, the queuing manager will receive the message and send a message to the billboard to call the next number in the queue, (vi) the queuing manager logs when the turn was called, and the total waiting time for future analysis and statistics. If the customer chooses the Create an order option, (i) the kiosk displays optionally a list of departments, categories of products, or a list of products, (ii) the customer navigates through the options until the desired product is found, (iii) once the product is selected, the customer indicates the amount of weight/count, optionally the slice thickness, of the item to order, (iv) as an option, the customer could enter some preparation instructions with a limit of 50 characters (e.g. the slice thickness, in separated bags, etc.), (v) when the customer is happy with the selection the product must be added to the list and the kiosk will return to enable new products to be added to the order, (v) to finish the order, the customer will need to touch the Submit order button, and then .the order is created and stored by the order manager and available for the scales to query it (similar to online orders), (vi) the finish order screen will display requesting the following information from the customer: the desired pick up time (based on the available time slots provided by the order manager) and notification options: Print or Notify (SMS or email), (vii) the customer enters the selected option and the contact information, (viii) with exception of the order receipt, the SMS and email options will communicate to the customer confirming the order has been received and the order number.

The scales periodically query the computer system/order manager for new orders, depending on the pickup date/time the scale will display the new kiosk-based order in the list provided to the scales. The scale operator will select the order and fulfill it. When is ready, the scale operator will touch the Ready to pickup button. The order manager will receive the message, update the order status and notify the customer via SMS or email.

The details of one or more embodiments are set forth in the accompanying drawings and the description below. Other features, objects, and advantages will be apparent from the description and drawings, and from the claims.

### BRIEF DESCRIPTION OF THE DRAWINGS

Fig. 1 is a schematic of an online order management and fulfillment system;
Fig. 2 is a schematic depiction of an exemplary scale;
Figs. 3-9 show exemplary interface screens presented on a scale used in the order management and fulfillment system.

### DETAILED DESCRIPTION

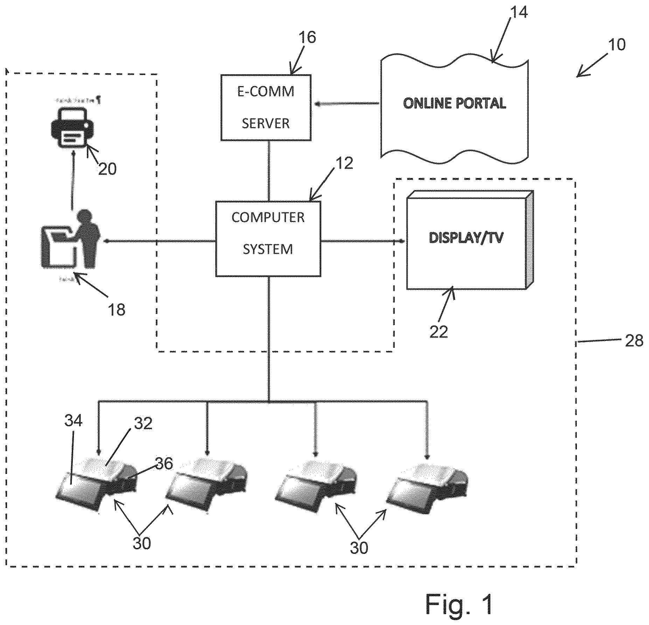

Referring to Fig. 1, a system a scale-based order management and fulfillment system 10 includes a computer system 12 configured as an order manager. The computer system could be comprised of one or more computers the location of which could vary. For example, the order management functionality could reside in the cloud, on a virtual machine, on a headquarters dedicated server or on a store-specific server. The computer system 12 is connected for electronic receipt of customer orders from one or more external devices or systems. Here, a customer online portal 14 associated with a store chain e-commerce server 16 operates as one device/system capable of providing orders to the computer system 12, and an in-store kiosk 18 operates as another device/system capable of providing orders to the computer system 12. The kiosk 18 include an associated printer mechanism 20 at which in-store customers can choose to print a ticket with order details or, in the case of a customer simply waiting in line, a customer queue number. The computer system 12 is connected for delivering display information to a display 22 (e.g., a TV), which can include now serving/queue information and/or other information.

A plurality of scales 30 are also located within a store 28 in which the kiosk 18 and display 22 are located. Each scale includes a weigh station 32 and a display 34. Weigh station 32 may take the form of a platter-type member supported in relationship to a load cell (internal of the scale housing) that produces a weight indicative signal when a food item is placed on the weigh station 32 for weighing. Illustrated display 34 may take the form of an LCD-type display, but other technologies could be used. In the illustrated embodiment the display 34 is a touch screen-type display that also functions as a user input device by displaying image buttons/icons that can be triggered or selected by an operator. A side portion 36 of the scale housing holds a label printer and associated supply of labels, which are dispensed through a label slot in the housing. Although display 34 is shown incorporated into the housing of the scale 30, the display could take the form of a marquee-type display located on a support extending upward from the scale housing. In some implementations the display need not be attached to the scale/printer via a support but could be a separately housed console that is logically attached to the scale/printer.

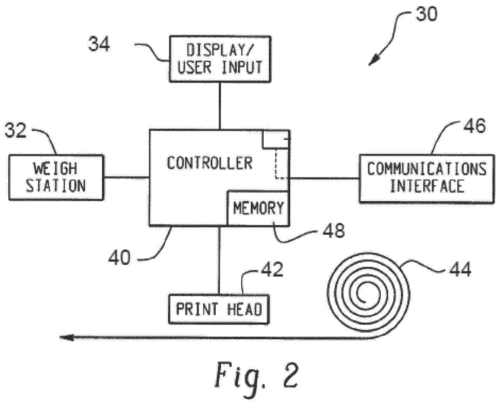

Referring the exemplary schematic of Fig. 2, each scale 30 includes a controller 40, such as a microprocessor-based unit, connected to control the display 34 and user input 36 and connected to receive weight indicative signals from the weighing station 32. A print head 42 and associated supply of label stock 44 that can be moved past the print head 42 is also shown. In one example the print head 42 may be a thermal print head for use with thermally activated label stock. However, other types of printing technologies and label media could also be used. Likewise, RFID read/write technology could be incorporated for dealing with labels having RFID tags. The controller 40 is also connected with a communications interface 46, which may take the form of a standard connector (and associated circuitry) for a USB, RS-232, Ethernet or other hard-wired communication line. In another example the communications interface 46 may be formed by a wireless communication device such as an RF transceiver. Multiple communication interfaces could also be provided. The illustrated controller 40 includes associated memory 48 for storing product information (e.g., product names, characteristics and pricing stored in association with corresponding product numbers), software and firmware. By way of example, each scale 30 may be of the type described in U.S. Patent No. 11,041,751, the entirety of which is incorporated herein by reference.

Thus, each scale 30 includes a weighing station for receiving food products to be weighed, the weighing station having an associated mechanism (e.g., internal load cell) for producing weight indicative signals. Each scale also includes a controller for receiving weight indicative signals from the mechanism, where the controller operable to establish a price for a weighed food product based in part upon a weight indicative signal produced for that food product. Each scale further includes a communications interface for receiving customer order information from the computer system and for communicating order handling information to the computer system. Each scale further includes an operator interface including an operator display, the controller connected with the operator display for control thereof. The controller of each scale is configured to receive the customer order information and display, on the operator display, information enabling the operator to select, view and process orders.

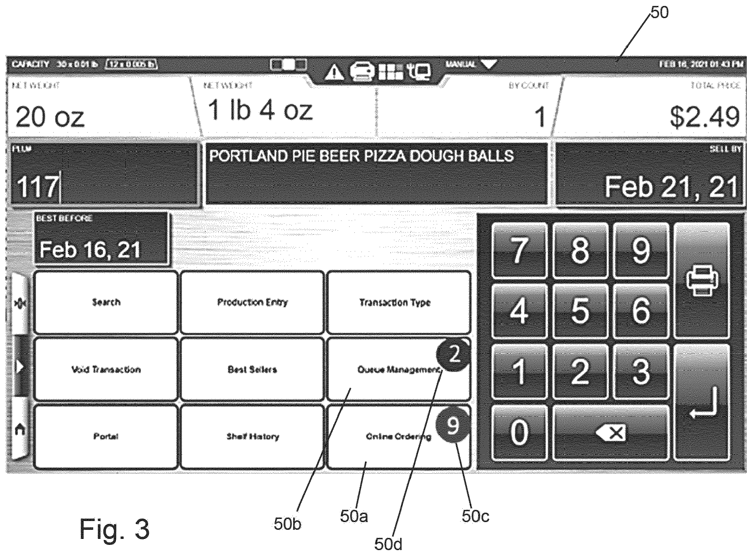

The computer system 12 is configured to dynamically process customer orders for fulfillment by scale operators within the store. In this regard, as seen in exemplary scale interface screen 50 of Fig. 3, various operator selectable buttons are presented on the display, including an Online Ordering button 50a and a Queue Management button 50b. Each of these buttons is overlaid with a corresponding visual notification graphic 50c and 50d that indicates the number or online orders waiting to be processed and the number of persons in the queue waiting to be served in the department in which the scale is located. These graphics are maintained and updated by the computer system 12, which communicates the updates to the scales, in real time. When additional orders are sent out to the scales, causing update of the graphic 50c, the computer system 12 can also trigger the scales to output a visual and/or audio alert to communicate that an update has been made.

In addition, the computer system 12 tracks incoming customer online and/or or kiosk orders and limits customer order completion availability based upon a number of orders permitted during a specified time period. So, for example, the computer system 12 may only permit 10 online orders to be processed per hour, so as to prevent overloading of scale operators in the store department. If additional online orders come in once the limit is reached, the computer system 12 will communicate to the e-commerce server 16 that time slots are not available until a next hour and/or present specific time slots that are available and open for selection. The computer system 12 is further configured to track incoming customer online orders and limit customer order completion availability based upon operating hours of the perishables department of the store. So, for example, if the online order information received from the e-commerce server 16 after the deli department has closed, the computer system 12 communicates back to the e-commerce server that the order is refused and/or presents options for completion of the order at a later time (e.g., the next day when the department is again open). For this purpose, the computer system 12 includes a database that includes store department hours. Further, the computer system 12 tracks whether orders are timely completed, and is configured to alert as an order approaches its deadline for completion. Thus, as orders come near customer pickup times, the computer system 12 will trigger the scales to alert operators to the need to complete the order. For example, is a customer places an order for 2:00 PM pickup/completion, and the order it not filled by 1:40 PM, the computer system may initiate a color change and/or flashing of the graphic 50c, as well as causing the scales to output an audio alert in the form of beeping to hopefully catch attention that an order needs to be filled immediately.

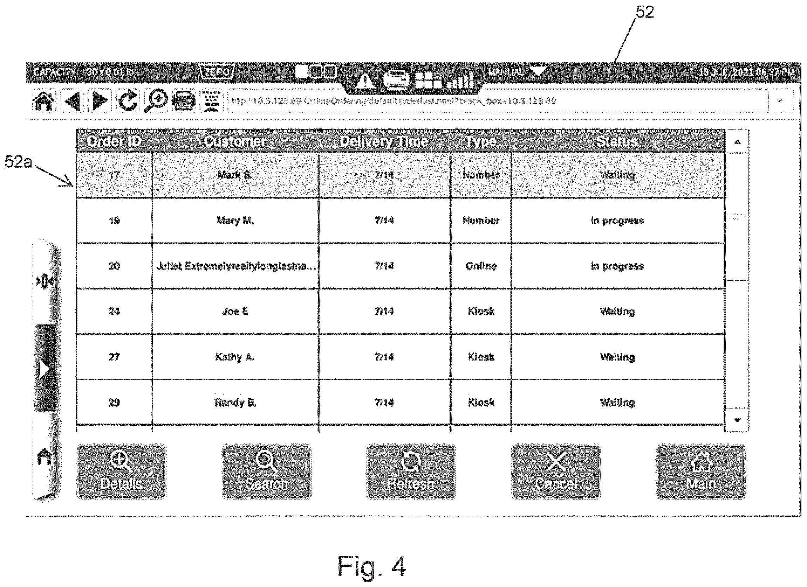

If the scale operator selects the Online Ordering button 50a, the display will transition to the exemplary interface screen 52 of Fig. 4, which shows a listing 52a of orders to be processed. Here, the listing includes Order ID, Customer name, Delivery Time, Type and Status fields for each order. Notably, the Type field identifies whether the order is an online-type order, a kiosk-type order or, simply a person waiting for live ordering (indicated by Number). The computer system 12 can be configured to filter customer orders according to target completion time associated with each customer order and to incorporate, into the customer order information communicated to the scales, prioritization data that causes the scales to, at least initially, display received customer orders in the list format sequentially based on the target completion times for the customer orders. The computer system 12 may also be configured such that sorting of the orders based upon any of the Order ID, Customer name, Delivery Time, Type and Status fields is available to the scale operator by simply touching the field name. Moreover, in embodiments, the computer system 12 tracks completion or non-completion of the customer orders and, upon non-completion of a given customer order according to its associated target completion time, generates an alert message that is electronically communicated to a designated store contact (e.g., SMS message or e-mail to a store manager or department manager).

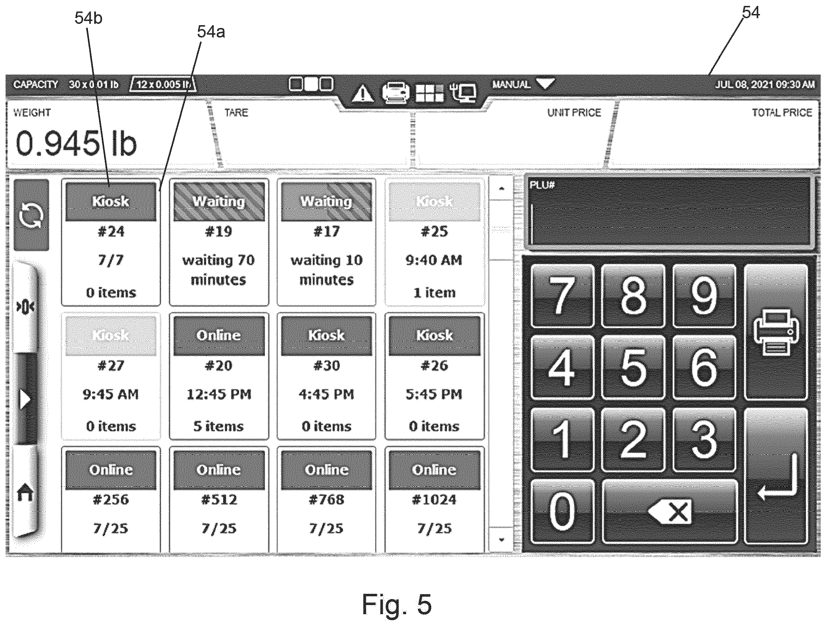

The exemplary interface screen 54 of Fig. 5 shows an alternative display format for the orders, which is tiled. Each tile 54a includes an order type field 54b which specifies the order type. In addition, a color coding may be overlaid on the type field (e.g., red for overdue, blue for future, yellow for near future and teal for customers that are waiting in-person).

Regardless of the exact format of the interface screen (e.g., 52 or 54), the computer system 12 is configured to associate each customer order with the online ordering portal or the kiosk and incorporates, into the customer order information communicated to the scales, an order source indicator that causes the scales to display received customer orders with the visual indication of whether the customer order is a kiosk-type order or an online-type order. Customer orders that will be in-person are also tracked with the queue manager.

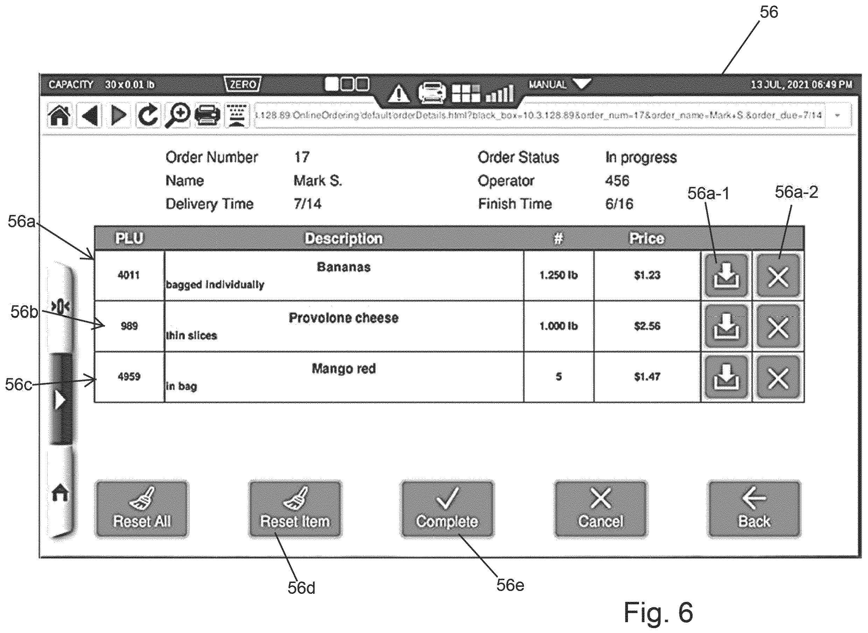

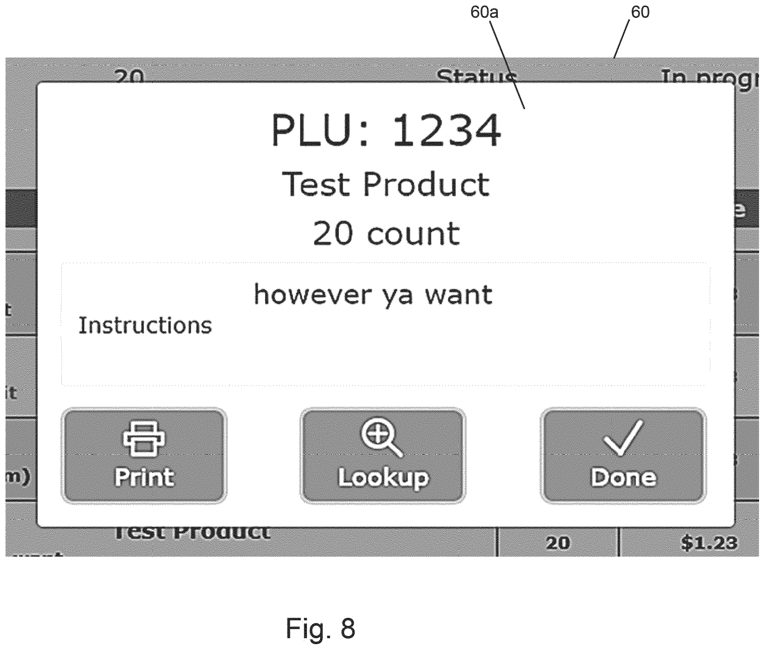

If the scale operator selects one of the orders (e.g., by pressing the Order ID field of the order), then the order details are presented to the scale operator, per the exemplary user interface screen 56 of Fig. 6. In some embodiments, when the computer system 12 receives an indication that a given customer order has been selected for handling by an operator of a given scale, the computer system updates the order information of other scales so that the given customer order is locked from selection by another operator on another scale. In the interface screen 56 of Fig. 6, each item in the order is designated as a line item 56a, 56b and 56c of the order, each with associate fields, including PLU (price look-up number), Description , # (desired amount by weigh or count) and Price. In addition, each line item includes a selectable fill order graphic 56a-1 by which the scale operator can begin to fill the order, with selection of such graphic bring up any further order details for the line item and/or automatically transitioning the displayed interface to a standard weighing screen in which the PLU for the item being filled is already populated to facilitate weighing, pricing and label printing. For example, Fig. 8 shows an exemplary user interface screen 60 in which a pop-up window 60a is generated with the additional order details, such as instructions, which could be how thick to slice the food product (e.g., thin or thick) or how to package the food product (e.g., separate into two packages).

Referring again to Fig. 6, each line item also includes an associated item status graphic 56a-2, that may also be color-coded. For example, a blue X graphic may indicate an item that is yet to be filled, a red X graphic indicating an item that cannot be filled, a green checkmark graphic may indicate an item that has already been filled, and a yellow arrow graphic indicating an item that has been filled with a substitute or alternative item (e.g., the order brand of ham replaced with an alternative brand). Once an item is filled or identified as unfillable, the computer system 12 may disable that line item row from further selection, unless the item is reset by the scale operator (e.g., using the selectable Reset Item button 56d). Upon completion of all line items, the scale operator selects the Complete button 56e to communicate that the order is completely filled (but for any items not fillable).

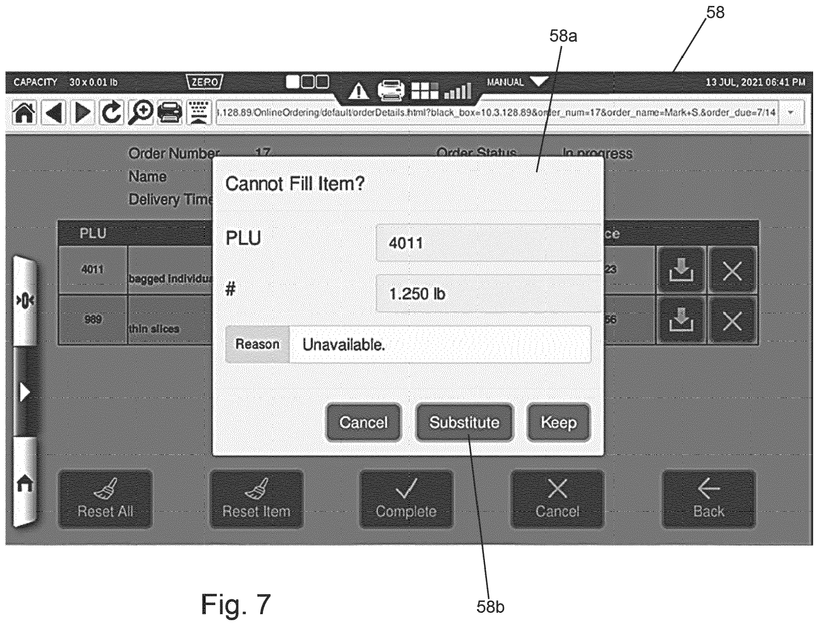

The computer system 12 interfaces with the scale during order filling by the scale operator, and is configured such that, for each customer order, the computer system 12 tracks each of (1) time of submission of the customer order to the computer system, (2) time of initial opening of the customer order, by a scale operator, for review and fulfillment and (3) time of completion, by the scale operator, of the customer order. The computer system 12 may also be configured to track timing of each line item, substitutes made by the scale operator, and items that are unfillable from the order. In this regard, exemplary user interface screen 58 of Fig. 7 shows a pop-up window 58a that the scale operator can use to indicate that an item cannot be filled and/or substitute another item (e.g., using the selectable Substitute button 58b).

The dynamic handling of customer orders by the computer system 12 also enables order to be changed or canceled, at least in some situations. So, for example, if a customer who previously submitted an online order via the portal 14 later determines to remove or change an item in the order, or cancel the order entirely, the customer can do so provided a time criteria is met. Thus, the computer system 12 receives, for example, order cancellations from the e-commerce server 16 and determines acceptance or denial of each order cancellation based upon a time parameter associated with the customer order to which such order cancellation relates. The time parameter may for example, require all cancellations to occur at least one hour before the designated completion time of the order. The exact time criteria could be different or adjustable (e.g., by a store manager or department manager).

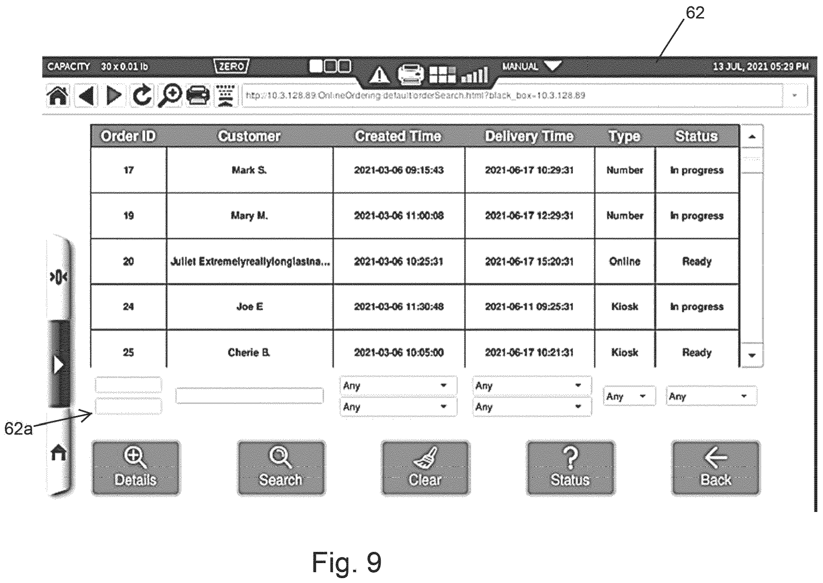

Referring again to Fig. 4, the order listing screen 52 includes various function buttons, including a selectable search button 52b that enables a scale operator to pull up the user interface search screen 62 of Fig. 9, which includes search fields 62a that enable the scale operator to search by the various order field data. If customers or a manager inquire about an order, the scale operator can attempt to search and identify order status.

Various other features can be implemented in the online order management system 10, including those described in the Summary section above.

In examples:
Ex1. A scale-based order management and fulfillment system, comprises: a computer system configured as an order manager, the computer system connected for electronic receipt of customer orders from one or more external devices or systems; a plurality of scales within a store, each scale including: a weighing station for receiving food products to be weighed, the weighing station having an associated mechanism for producing weight indicative signals; a controller for receiving weight indicative signals from the mechanism, the controller operable to establish a price for a weighed food product based in part upon a weight indicative signal produced for that food product; a communications interface for receiving customer order information from the computer system and for communicating order handling information to the computer system; an operator interface including an operator display, the controller connected with the operator display for control thereof. The controller is configured to receive the customer order information and display, on the operator display, information enabling the operator to select, view and process orders. The computer system is configured to dynamically process customer orders for fulfillment by carrying out at least one of the following operations: (a) tracking incoming customer orders and limiting customer order completion availability based upon a number of orders permitted during a specified time period; and/or (b) receiving order cancellations and determining acceptance or denial of each order cancellation based upon a time parameter associated with the customer order to which such order cancellation relates; and/or (c) where a first external device or system is comprised by an in-store kiosk and a second external device or system is comprised by an online ordering portal, associating each customer order with the first external device or system or the second external device or system and incorporating, into the customer order information communicated to the scales, an order source indicator that causes the scales to display received customer orders with a visual indication of whether the customer order is a kiosk-type order or an online-type order.
Ex2. The system of Exl, wherein the computer system is configured to carry out at least two of operations (a), (b) or (c).
Ex3. The system of Exl, wherein the computer system is configured to carry out all of operations (a), (b) and (c).
Ex4. The system of any preceding example, wherein the computer system is further configured to: track incoming customer orders and limit customer order completion availability based upon operating hours of a perishables department of the store.
Ex5. The system of any preceding example, wherein the computer system is further configured to: filter customer orders according to a target completion time associated with each customer order and incorporate, into the customer order information communicated to the scales, prioritization data that causes the scales to display received customer orders in a list format that is sequential based on the target completion times for the customer orders.
Ex6. The system of any preceding example, wherein the computer system is further configured to: track completion or non-completion of the customer orders and, upon non-completion of a given customer order according to its associated target completion time, generating an alert message that is electronically communicated to a designated store contact.
Ex7. The system of any preceding example, wherein the computer system is further configured to: for each customer order, track each of (1) time of submission of the customer order to the computer system, (2) time of initial opening of the customer order, by a scale operator, for review and fulfillment and (3) time of completion, by the scale operator, of the customer order.
Ex8. The system of any preceding example, wherein the computer system is further configured to: upon receipt, from a given scale, of an indication that a given customer order has been selected for handling by an operator of the given scale, lock the given customer order from selection by another operator on another scale.
Ex10. The computer system of any preceding example, wherein the scales interface with the computer system via one of a web page interface or a scale online ordering client application.

It is to be clearly understood that the above description is intended by way of illustration and example only, is not intended to be taken by way of limitation, and that other changes and modifications are possible.

Certain embodiments of the invention are described in the following numbered clauses in which:
Clause 1. A scale-based order management and fulfillment system, comprising:
   a computer system configured as an order manager, the computer system connected for electronic receipt of customer orders from one or more external devices or systems;
   a plurality of scales within a store, each scale including:
      a weighing station for receiving food products to be weighed, the weighing station having an associated mechanism for producing weight indicative signals;
      a controller for receiving weight indicative signals from the mechanism, the controller operable to establish a price for a weighed food product based in part upon a weight indicative signal produced for that food product;
      a communications interface for receiving customer order information from the computer system and for communicating order handling information to the computer system;
      an operator interface including an operator display, the controller connected with the operator display for control thereof;
      wherein the controller is configured to receive the customer order information and display, on the operator display, information enabling the operator to select, view and process orders;
   wherein the computer system is configured to dynamically process customer orders for fulfillment, including:
      tracking incoming customer orders and limiting customer order completion availability based upon a number of orders permitted during a specified time period.
Clause 2. The system of clause 1, wherein the computer system is further configured to:
   track incoming customer orders and limit customer order completion availability based upon operating hours of a perishables department of the store.
Clause 3. The system of clause 1, wherein the computer system is further configured to:
   receive order cancellations and determine acceptance or denial of each order cancellation based upon a time parameter associated with the customer order to which such order cancellation relates.
Clause 4. The system of clause 1, wherein the computer system is further configured to:
   filter customer orders according to a target completion time associated with each customer order and incorporate, into the customer order information communicated to the scales, prioritization data that causes the scales to display received customer orders in a list format that is sequential based on the target completion times for the customer orders.
Clause 5. The system of clause 1, wherein the computer system is further configured to:
   track completion or non-completion of the customer orders and, upon non-completion of a given customer order according to its associated target completion time, generating an alert message that is electronically communicated to a designated store contact.
Clause 6. The system of clause 1, wherein the computer system is further configured to:
   for each customer order, track each of (1) time of submission of the customer order to the computer system, (2) time of initial opening of the customer order, by a scale operator, for review and fulfillment and (3) time of completion, by the scale operator, of the customer order.
Clause 7. The system of clause 1, wherein a first external device or system is comprised by an in-store kiosk and a second external device or system is comprised by an online ordering portal, wherein the computer system is further configured to:
   associate each customer order with the first external device or system or the second external device or system and to incorporate, into the customer order information communicated to the scales, an order source indicator that causes the scales to display received customer orders with a visual indication of whether the customer order is a kiosk-type order or an online-type order.
Clause 8. The system of clause 1, wherein the computer system is further configured to:
   upon receipt, from a given scale, of an indication that a given customer order has been selected for handling by an operator of the given scale, lock the given customer order from selection by another operator on another scale.
Clause 9. The system of clause 1, wherein the scales interface with the computer system via one of a web page interface or a scale online ordering client application.

## Claims

1. A scale-based order management and fulfillment system, comprising:
a computer system configured as an order manager, the computer system connected for electronic receipt of customer orders from one or more external devices or systems;
a plurality of scales within a store, each scale including:
a weighing station for receiving food products to be weighed, the weighing station having an associated mechanism for producing weight indicative signals;
a controller for receiving weight indicative signals from the mechanism, the controller operable to establish a price for a weighed food product based in part upon a weight indicative signal produced for that food product;
a communications interface for receiving customer order information from the computer system and for communicating order handling information to the computer system;
an operator interface including an operator display, the controller connected with the operator display for control thereof;
wherein the controller is configured to receive the customer order information and display, on the operator display, information enabling the operator to select, view and process orders;
wherein the computer system is configured to dynamically process customer orders for fulfillment by carrying out at least one of the following operations:
(a) tracking incoming customer orders and limiting customer order completion availability based upon a number of orders permitted during a specified time period;
and/or
(b) receiving order cancellations and determining acceptance or denial of each order cancellation based upon a time parameter associated with the customer order to which such order cancellation relates; and/or
(c) where a first external device or system is comprised by an in-store kiosk and a second external device or system is comprised by an online ordering portal, associating each customer order with the first external device or system or the second external device or system and incorporating, into the customer order information communicated to the scales, an order source indicator that causes the scales to display received customer orders with a visual indication of whether the customer order is a kiosk-type order or an online-type order.

2. The system of claim 1, wherein the computer system is configured to carry out at least two of operations (a), (b) or (c).

3. The system of claim 1, wherein the computer system is configured to carry out all of operations (a), (b) and (c).

4. The system of any preceding claim, wherein the computer system is further configured to:
track incoming customer orders and limit customer order completion availability based upon operating hours of a perishables department of the store.

5. The system of any preceding claim, wherein the computer system is further configured to:
filter customer orders according to a target completion time associated with each customer order and incorporate, into the customer order information communicated to the scales, prioritization data that causes the scales to display received customer orders in a list format that is sequential based on the target completion times for the customer orders.

6. The system of any preceding claim, wherein the computer system is further configured to:
track completion or non-completion of the customer orders and, upon non-completion of a given customer order according to its associated target completion time, generating an alert message that is electronically communicated to a designated store contact.

7. The system of any preceding claim, wherein the computer system is further configured to:
for each customer order, track each of (1) time of submission of the customer order to the computer system, (2) time of initial opening of the customer order, by a scale operator, for review and fulfillment and (3) time of completion, by the scale operator, of the customer order.

8. The system of any preceding claim, wherein the computer system is further configured to:
upon receipt, from a given scale, of an indication that a given customer order has been selected for handling by an operator of the given scale, lock the given customer order from selection by another operator on another scale.

9. The computer system of any preceding claim, wherein the scales interface with the computer system via one of a web page interface or a scale online ordering client application.
